# EUROPÄISCHE PATENTSCHRIFT

(11) **EP 3 019 846 B1**
(45) Veröffentlichungstag und Bekanntmachung des Hinweises auf die Patenterteilung: **16.08.2017**
(21) Anmeldenummer: 14735883.2
(22) Anmeldetag: 20.06.2014
(51) Int. Cl.: G01M 15/02, G01F 9/00, F02M 37/00, F02M 37/20, F02D 33/00

(54) **VORRICHTUNG UND VERFAHREN ZUR KONTINUIERLICHEN MESSUNG DES DYNAMISCHEN KRAFTSTOFFVERBRAUCHS EINER BRENNKRAFTMASCHINE**
DEVICE AND METHOD FOR CONTINUOUSLY MEASURING THE DYNAMIC FUEL CONSUMPTION OF AN INTERNAL COMBUSTION ENGINE
DISPOSITIF ET PROCÉDÉ DE MESURE EN CONTINU DE LA CONSOMMATION DYNAMIQUE DE CARBURANT D'UN MOTEUR À COMBUSTION INTERNE

(30) Priorität: 12.07.2013 AT 504532013
(43) Veröffentlichungstag der Anmeldung: 18.05.2016
(73) Patentinhaber: AVL List GmbH, 8020 Graz (AT)
(72) Erfinder: ROSENKRANZ, Anton, A-8010 Graz (AT); HARMS, Klaus-Christoph, A-8051 Thal/Graz (AT); WIESINGER, Michael, A-8010 Graz (AT)
(74) Vertreter: Patentanwälte Pinter & Weiss OG
(86) Internationale Anmeldenummer: PCT/EP2014/063022
(87) Internationale Veröffentlichungsnummer: WO 2015/003887

(56) Entgegenhaltungen:
- EP-A1- 1 729 100
- AT-B1- 505 014
- AT-U2- 9 241
- US-A- 3 831 439
- US-A- 4 404 847
- US-A- 5 708 201

## Beschreibung

Die Erfindung betrifft eine Vorrichtung zur kontinuierlichen Messung des dynamischen Kraftstoffverbrauchs einer Brennkraftmaschine, mit einem in einer Rücklaufleitung von der Abströmseite des Kraftstoffsystems der Brennkraftmaschine angeordneten Entlüftungstank, der auch mit der Zulaufleitung des Messsystems zur Versorgung des Kraftstoffsystems der Brennkraftmaschine verbunden ist und eine Füllstand-Regeleinrichtung zur zumindest weitgehenden Konstanthaltung der Kraftstoffmasse im Füllvolumen aufweist. Weiters betrifft die Erfindung auch ein entsprechendes Verfahren, wobei der vom Kraftstoffsystem der Brennkraftmaschine rückgeführte, unverbrauchte Kraftstoff in einem Entlüftungstank, dessen Füllstand zumindest weitestgehend konstant gehalten wird, entgast und dem Zulauf zur Anströmseite des Kraftstoffsystems der Brennkraftmaschine wieder zugefügt wird.

Für Forschung und Entwicklung an Brennkraftmaschinen ist es wichtig, den Kraftstoffverbrauch - das ist die tatsächlich in den Brennraum der Brennkraftmaschine eingebrachte Kraftstoffmasse pro Zeiteinheit - zeitaktuell und genau zu messen. Die Versorgung der Brennkraftmaschine am Prüfstand oder in der jeweiligen Anwendung mit flüssigem Kraftstoff, beispielsweise Benzin oder Diesel, erfolgt gewöhnlich aus einem Tank, wobei es je nach Art des Systems zur Einbringung des Kraftstoffs in den Brennraum - in vielen Fällen ein Einspritzsystem - überschüssigen Kraftstoff gibt, welcher unter anderem auch zur Kühlung und Schmierung des Einspritzsystems dient und durch eine Rücklaufleitung wiederum in den Tank befördert wird. Dort wird der rückgeführte Kraftstoff auf das im Tank gegebene Temperaturniveau gebracht, sowie ein eventuell in Form von Blasen vorhandener Gasgehalt abgeschieden. Der Kraftstoffverbrauch ist bei derartigen Systemen mit Rücklauf durch die Differenz aus zugeführter und rückgeführter Kraftstoffmasse gegeben, wobei sich zur Messung folgende Messanordnung bewährt hat:
Kraftstoff aus dem Tank wird durch Schwerkraft oder mithilfe einer Kraftstoffpumpe einem Verbrauchssensor zur Messung des Kraftstoff-Zulaufs und weiter einer Konditioniereinheit zugeführt, in der einerseits ein erforderlicher Kraftstoff-Über- oder - Unterdruck mithilfe einer Pumpe und gegebenenfalls mittels Druckreglern eingestellt wird; andererseits und vor allem wird dort eine definierte Kraftstofftemperatur mit einem Wärmetauscher eingestellt. Von dieser Konditioniereinheit entnimmt das Einspritzsystem der Brennkraftmaschine den Kraftstoff (Kraftstoff-Vorlauf). Im Inneren des Einspritzsystems der Brennkraftmaschine (und daher der Verbrauchsmessung im Allgemeinem nicht zugänglich, oder nur über die von der Brennkraftmaschinensteuerung (ECU) ausgegebenen Daten für zum Beispiel den Rail-Druck) erzeugen in vielen Fällen eine Vorpumpe einen Niederdruck, eine Hochdruckpumpe einen Hochdruck und ein Druck- oder Mengenregelsystem den von der Brennkraftmaschinensteuerung geforderten Versorgungsdruck (Rail-Druck, zumeist einfach der Hochdruck) zur Versorgung der Injektoren. Der überschüssige Kraftstoff gelangt bei derartigen Einrichtungen mit einem im Allgemeinen sehr geringen Überdruck in den Kraftstoff-Rücklauf und eine im Verbrauchsmesssystem parallel zur Brennkraftmaschine angeordnete Bypass-Leitung, wobei allenfalls dort vorgesehene Druckregelsysteme dafür sorgen, dass Vorlauf und Rücklauf eine vernachlässigbar geringe Druckdifferenz aufweisen oder aber ein für den Vorlauf im System vorgeschriebener Druck herrscht. Die Bypass-Leitung wird auch für eine vom aktuellen Kraftstoffverbrauch der Brennkraftmaschine unabhängige und andauernd starke Kraftstoffzirkulation im gesamten Messkreis benötigt, und diese ermöglicht ein rasches Reagieren der Temperaturregelung in der Konditioniereinheit.

Der Messung wegen darf der Kraftstoff- Rücklauf von der Brennkraftmaschine nicht mehr vorbei am Verbrauchssensor direkt in den Tank geleitet werden, sondern muss im Messkreis verbleiben und also der Leitung zwischen Verbrauchssensor und Konditioniereinheit zugeführt werden. Das ist ohne weiteres möglich, wenn die im rückgeführten Kraftstoff enthaltene Gasmenge vernachlässigbar gering ist. Bei manchen derartigen Systemen kann aber die Menge der mit dem rückgeführten Kraftstoff transportierten Gase (verdampfter Kraftstoff und gegebenenfalls auch Kompressionsluft und Verbrennungsgas aus der Brennkraftmaschine) beträchtlich sein, womit das in den Kraftstoffkreis eingebrachte Gasvolumen nicht nur die Funktion der Brennkraftmaschine beeinträchtigen, sondern auch einen negativen Scheinverbrauch darstellen und damit die Messung erheblich stören würde. Daher muss das Gas aus dem rückgeführten Kraftstoff möglichst vollständig entfernt werden. Es ist dazu bekannt, einen sogenannten Entlüftungstank vor dem oder am Zusammenfluss des rückgeführten und des vom Verbrauchsensor zugeführten Kraftstoffs vorzusehen, sodass die Konditioniereinheit und in der Folge die Brennkraftmaschine mit blasenfreiem Kraftstoff versorgt werden können. Dieser Entlüftungstank wird gegebenenfalls auch bei einem gegenüber Atmosphärendruck erhöhten oder erniedrigten Druck im Kraftstoff und im darüber befindlichen Gas betrieben, um so die reale Situation mit einem Tank, der höher oder tiefer als die Brennkraftmaschine angebracht ist, oder mit einer Kraftstoff-Entnahmepumpe, möglichst gut nachzubilden.

Damit nun der im Kraftstoff-Zulauf einer derartigen Vorrichtung angeordnete Verbrauchssensor den tatsächlichen Verbrauch zeitaktuell und genau messen kann und möglichst keinen Scheinverbrauch mit anzeigt, muss die Kraftstoffmasse im gesamten Messkreis (und vor allem im Entlüftungstank mit seinem relativ großen Volumen) möglichst konstant sein. Aus diesem Grunde ist bei bekannten derartigen Kraftstoffverbrauch-Messanordnungen (siehe beispielsweise AT 9 241 U2, EP 1729100 A1, US 5708201 oder AT 505 014 B1) ein Zulaufventil am Entlüftungstank vorgesehen, das von einem Schwimmkörper gesteuert wird und den Zulauf dann öffnet, wenn der Füllstand im Entlüftungstank unter einen bestimmten Pegel sinkt. Damit soll gewährleistet werden, dass vom Verbrauchssensor gerade so viel Kraftstoff in den Entlüftungstank gelangt, dass die Kraftstoffmasse im Entlüftungstank konstant bleibt. Das funktioniert aber nur unter der Bedingung, dass dem Entlüftungstank zu jedem Zeitpunkt über den Vorlauf mehr Kraftstoffvolumen entnommen, als über den Rücklauf zugeführt wird. In der Realität kann aber durchaus zeitweise mehr Volumen zugeführt als entnommen werden, beispielsweise beim Abstellen der Brennkraftmaschine, wenn die im Hochdruckteil des Einspritzsystems gespeicherte Kraftstoffmenge zurückflutet, oder beim Reduzieren der Einspritzmenge und der Drehzahl der Brennkraftmaschine (coast-down). In solchen Fällen steigt der Füllstand trotz gesperrtem Zulauf weiter an und der Verbrauchsensor meldet bei gesperrtem Zulaufventil nicht die Rückströmung als negativen (Schein-) Verbrauch, sondern Null Verbrauch. Sobald dem Messkreis wieder mehr Volumen entnommen als rückgeführt wird, kann der erhöhte Pegel im Entlüftungstank im Lauf der Zeit solange abgebaut werden, bis das Zulaufventil wieder öffnet um den Pegel nicht weiter absinken zu lassen, womit der Verbrauchsensor erst ab diesem Zeitpunkt den Verbrauch wieder richtig messen kann. Dies führt vor allem bei Brennkraftmaschinen mit großer Gasmenge in der Rückführleitung zu erheblichen Schwierigkeiten und Messungenauigkeiten: Beispielsweise kann die transportierte Gasmenge bei Diesel-Großmotoren zeitweise ein Vielfaches des rückgeführtem Kraftstoffvolumens ausmachen.

Außerdem gibt es Bereiche im Messkreis, in denen es unvermeidliche Änderungen der darin enthaltenen Kraftstoffmasse gibt, wie insbesonders den Kraftstoff-Rücklauf mit Gasblasen und erhöhter Temperatur sowie grundsätzlich die Volumina im Einspritzsystem der Brennkraftmaschine, die dem Verbrauchmesssystem nicht oder nur über die Datenausgabe der Brennkraftmaschinensteuerung (ECU) zugänglich sind. Jede Änderung der im Messkreis gespeicherten Kraftstoffmasse stellt einen Scheinverbrauch dar und wird - sofern dieser einen entsprechenden Kraftstoff-Durchfluss im Verbrauchssensor zu Folge hat - vom Verbrauchssensor ebenso wie der durch die Verbrennung im Motor gegebene Kraftstoffverbrauch registriert. Der vom Verbrauchssensor angezeigte Verbrauch ist also nicht der tatsächliche Kraftstoffverbrauch sondern enthält üblicherweise als Messfehler auch den Scheinverbrauch.

Aufgabe der vorliegenden Erfindung ist es, die angesprochenen Nachteile der bekannten Vorrichtungen und Verfahren zu kontinuierlichen Messung des dynamischen Kraftstoffverbrauchs einer Brennkraftmaschine zu vermeiden und eine derartige Vorrichtung beziehungsweise ein derartiges Verfahren so zu verbessern, dass die im Messkreis enthaltene Kraftstoffmasse unter allen möglichen Betriebsbedingungen möglichst konstant gehalten und die darüber hinaus verbleibenden und gegebenenfalls unvermeidlichen Änderungen der im Messkreis befindlichen Kraftstoffmasse möglichst genau bei der Ermittlung des tatsächlichen Kraftstoffverbrauchs der Brennkraftmaschine rechnerisch berücksichtigt werden können.

Diese Aufgabe wird bei einer erfindungsgemäßen Vorrichtung dadurch gelöst, dass die an einem Anschluss des Entlüftungstanks befindliche Füllstand-Regeleinrichtung eine Zirkulationspumpe sowie ein damit verbundenes, ständig durchströmtes, abhängig vom zu regelnden Füllstand mehr oder weniger geöffnetes Stellventil aufweist. Beim erfindungsgemäßen Verfahren erfolgt demgemäß an einem der Anschlüsse des Entlüftungstanks andauernd eine füllstandabhängig geregelte Medium-Zu- bzw. Abfuhr mit einer ständigen Zirkulationsströmung von Kraftstoff, oder einer ständigen Zu- bzw. Abfuhr von gasförmigem Medium. Das Stellventil des Entlüftungstanks wird also nicht wie üblich in der Nähe des Schaltpunktes "Auf/Zu" betrieben, sondern unabhängig vom aktuellen Kraftstoffverbrauch in einem Betriebspunkt mit permanentem Fluid-Durchfluss, der durch eine Zirkulationspumpe aufrechterhalten wird. Die Zirkulationspumpe und das Stellventil können dabei bevorzugt in einer Zirkulationsleitung zwischen dem Entlüftungstank und der Zulaufleitung des Kraftstoffs angeordnet sein. Auch vorteilhaft kann die Anordnung in einer Entnahmeleitung des Entlüftungstanks oder an einem Entgasungsanschluss desselben sein.

Beim erfindungsgemäßen Verfahren kann entsprechend vorteilhafterweise eine stetige Zirkulationsströmung von Kraftstoff zwischen Entlüftungstank und entweder Zulauf oder Entnahmeleitung des Kraftstoffes erfolgen. Andererseits kann vorteilhafterweise auch eine stetige Zu- bzw. Abfuhr von gasförmigem Medium am Entgasungsanschluss des Entlüftungstanks vorgenommen werden.

In allen Varianten kann das jeweilige Medium bzw. der stetige Mediumfluss durch das gesteuert geöffnete Stellventil je nach Ort seiner Installation entweder andauernd in den Entlüftungstank ein- oder aus diesem herausströmen, womit einerseits eine hysteresefreie Füllstand-Regelung erfolgen kann und andererseits nicht nur ein Ansteigen sondern auch ein Absinken der letztendlich konstant zu haltenden Kraftstoffmasse berücksichtigt werden kann.

Das im Stellventil und in der Zirkulationspumpe strömende Fluid kann damit (vorteilhafterweise) gasblasenfreier Kraftstoff an einem der Anschlüsse des Entlüftungstanks sein, oder sogar auch das Gas bzw. die Luft in der Entgasungsleitung des Entlüftungstanks.

In einer der oben beschriebenen Ausführungen bewirkt die von der Zirkulationspumpe aufrecht erhaltene Zirkulationsströmung des Fluids (Kraftstoff und/oder Entlüftungsgas) aus dem und wieder zurück in den Entlüftungstank, dass das Fluid durch das teilweise geöffnete Stellventil andauernd in den Entlüftungstank hineinströmt. Dabei bestimmt die in Abhängigkeit vom Füllstand des Kraftstoffs im Entlüftungstank gesteuerte Regelstellung des Stellventils ob dem Entlüftungstank mehr Fluid zugeführt oder entnommen wird. Auf diese Art wird der Füllstand im Tank konstant gehalten und einer sonst möglichen Überfüllung des Tanks entgegengewirkt.

Sinnvollerweise und im Allgemeinen wird die Zirkulationspumpe so betrieben, dass sie von einem niedrigeren zu einem höheren Druckniveau fördert. Daher kann es nach den gegebenen Druckverhältnissen im System auch vorteilhaft sein, die oben genannte Strömungsrichtung umzukehren, sodass dann der andauernde Fluid-Durchfluss durch das Stellventil nicht in den Tank sondern aus dem Tank heraus führt.

In weiterer Ausgestaltung der Erfindung kann parallel zur Zirkulationspumpe ein Überdruckventil angeordnet sein, dass dann öffnet, wenn die von der Zirkulationspumpe erzeugte Druckdifferenz höher als ein zulässiger Wert ist, und bewirkt, das ein unzulässig hoher Druck entsprechend abgebaut wird.

In weiterer Ausgestaltung der erfindungsgemäßen Vorrichtung ist vorgesehen, dass der Entlüftungstank zumindest zwei durch Einbauten getrennte Bereiche aufweist, welche mit vernachlässigbar geringem Strömungswiderstand hydraulisch kommunizieren und an ihrer Verbindung einen jeweils gleichen Druck aufweisen. Wenn nun der Füllstand in einem dieser mit beruhigtem und blasenfreiem Kraftstoff gefüllten Bereiche zur Steuerung des Stellventils herangezogen und konstant gehalten wird, wird auf diese Art erreicht, dass bei entsprechender Geometrie (nämlich Füllvolumen proportional zur Füllhöhe) und bei sonst gleichbleibenden Bedingungen von Druck und Temperatur, die im gesamten Entlüftungstank enthaltene Kraftstoffmasse konstant und weitgehend unabhängig von der Durchschäumung und von der Füllhöhe des anderen, zur Gasabscheidung dienenden Bereichs bleibt. Der gegebenenfalls durchschäumte und gasblasenreiche Kraftstoff gelangt dabei vorteilhafterweise in einen Bereich zum optimalen Abscheiden der mitgeführten Gasblasen, was beispielsweise durch eingebaute Gitter, Netze oder Prallplatten, die mit passender Strömungsgeschwindigkeit angeströmt werden, oder durch zyklonartige Einrichtungen oder dergleichen unterstützt werden kann. Von diesem Gasabscheide-Bereich gelangt der Kraftstoff über Einbauten, die ein weiteres Mitführen von Gasbläschen verhindern dann praktisch gasblasenfrei und beruhigt in einen anderen Bereich, in dem vorteilhafterweise der Füllstand zum Steuern des Stellventils abgegriffen wird, beispielsweise auf übliche Art mit einem Schwimmkörper oder durch Sensoren, die nach einem der vielen möglichen Messprinzipien (kapazitiv, induktiv, optisch, thermisch, akustisch, usw.) arbeiten.

Der Entlüftungstank mit Stellventil kann am Zusammenfluss des vom Verbrauchssensor gelieferten und des von der Brennkraftmaschine rückgeführten Kraftstoffes angeordnet sein, wobei es vorteilhaft ist, wenn Stellventil und Zirkulationspumpe im Kraftstoff-Zulauf vom Verbrauchssensor in den Entlüftungstank angeordnet sind und die Zirkulationspumpe andauernd blasenfreien Kraftstoff aus dem Entlüftungstank ansaugt und der Leitung zwischen Verbrauchssensor und Zulaufventil zuführt. Auf diese Art kann nicht nur einem drohenden Absinken des Füllstands im Entlüftungstank durch ein weiteres Öffnen des Stellventils und einem erhöhten Zufluss vom Verbrauchssensor entgegengewirkt werden, sondern auch einem drohenden Pegelanstieg, in dem nämlich das Zulaufventil weniger weit öffnet und die Zirkulationspumpe den überschüssigen Kraftstoff dem Verbrauchssensor zuführt, sodass dieser den momentan negativen Verbrauch zeitaktuell messen kann. Zum Einsatz kommt also ein sogenannter "offener" Verbrauchssensor, der auch eine Rückströmung zulässt und diese korrekt erfassen kann.

Bei der Auslegung des Stellventils für die erfindungsgemäße Vorrichtung ist natürlich zu beachten, dass die durch das Stellventil strömende Fluidmenge durch die Summe aus Zirkulationsströmung und Zu- bzw. Ablaufströmung gegeben ist.

Nach einer besonders bevorzugten Ausgestaltung der Erfindung ist der Entlüftungstank mit Stellventil nahe an der Brennkraftmaschine angeordnet, vorzugsweise dort, wo eine Bypass-Leitung und die Rücklaufleitung zusammengeführt sind. Auf diese Weise wird auch die Rücklaufleitung bis hin zur Verbindung mit dem Kraftstoff-Zulauf mit blasenfreiem Kraftstoff betrieben, womit nicht nur die im Entlüftungstank, sondern auch die im Rücklauf enthaltene Kraftstoffmasse weitgehend konstant gehalten werden kann.

Als Zirkulationspumpe kann im Falle von Kraftstoff als zirkulierendem Fluid unmittelbar eine im Messsystem auch sonst benötigte Kraftstoffpumpe dienen, etwa die in der Zulaufleitung zur Entnahme von Kraftstoff aus dem Tank angeordnete Pumpe, oder die in der Konditioniereinheit angeordnete Pumpe zum Aufrechterhalten der Zirkulation im gesamten Messkreis. Auf diese Art kann weiterer diesbezüglicher Aufwand vermieden werden.

Im Falle der Anordnung von Zirkulationspumpe und Stellventil an einem Entgasungsanschluss des Entlüftungstanks kann stets dafür gesorgt werden, dass die genau richtige Entlüftungsgasmenge bzw. Luft eingebracht oder entnommen wird, um den Füllstand im Entlüftungstank und den Druck im Rücklauf aufrecht und konstant zu halten. In diesem Fall, und wenn der Druck im Entlüftungstank größer als der Atmosphärendruck zu halten ist, kann vorteilhafterweise als Zirkulationspumpe unmittelbar eine Kompressorpumpe eines Druckluftnetzes der Brennkraftmaschine (falls vorhanden) dienen und Druckluft zum Aufrechterhalten einer Entgasungsströmung in den Entlüftungstank fördern.

In vielen Fällen ist es aber auch im letztgenannten Zusammenhang vorteilhaft, wenn das Stellventil von blasenfreiem Kraftstoff durchflossen wird, wozu es sinnvollerweise in der Entnahmeleitung des Entlüftungstanks, also in der Rückführleitung zum Verbrauchssensor und zur Konditioniereinheit im Vorlauf, angeordnet wird. Dabei ist allerdings auf das Vorzeichen der Regelung zu achten: Das Stellventil in der Entnahmeleitung muss bei steigendem Füllstand weiter öffnen und bei sinkendem Füllstand weiter schließen. Bei dieser Anordnung ist weiters von Vorteil, dass als Zirkulationspumpe unmittelbar die in der Konditioniereinheit bereits vorhandene Kraftstoffpumpe dienen kann, die ja eine andauernde Zirkulation des Kraftstoffs im gesamten Messkreis aufrecht erhält.

Vorteilhafterweise kann weiters eine zusätzliche Konditioniereinheit zur Temperaturkonditionierung des rückgeführten Kraftstoffes vorgesehen sein. Für das Ziel, die Kraftstoffmasse im Messkreis möglichst konstant zu halten, genügt es nicht, der Forderung zu entsprechen, Druck und Temperatur des Vorlaufs zu konditionieren, sondern es sollten auch der Rücklauf und der Entlüftungstank bei einer optimalen und weitgehend konstanten Temperatur betrieben werden und somit also ein Überschuss der von der Brennkraftmaschine in den Rücklauf eingebrachten Wärmemenge abgeführt werden. Dabei von großer Bedeutung ist die regelungstechnische Berücksichtigung auch der mit den Gasblasen transportierten latenten Wärme und deren Änderungen. Im Fall der Verdampfung des heißen Kraftstoffs in die Gasblasen hinein muss Verdampfungswärme aufgebracht werden, die den Kraftstoff abkühlt. Anderseits wird in Falle der Kondensation der in den Gasblasen enthaltenen Dämpfe Kondensationswärme frei und bewirkt eine Erwärmung des Kraftstoffs. Das Abscheiden der Gasbläschen im Entlüftungstank erfolgt vorteilhafterweise bei einer hohen Kraftstofftemperatur, die eine geringere Viskosität des Kraftstoffs zur Folge hat und das Aufsteigen und Entweichen der Gasbläschen erleichtert. Dazu geeignet ist beispielsweise die von der Brennkraftmaschine gelieferte erhöhte Rücklauftemperatur oder vorteilhafterweise eine eigene in der Rücklaufkonditionierung bewirkte Nacherwärmung beziehungsweise Thermostatisierung. Für eine gute Durchmischung des rückgeführten mit dem vom Verbrauchssensor zugeführten Kraftstoffs sollten die beiden Flüssigkeiten möglichst die gleiche Temperatur aufweisen wobei diese möglichst konstant und nahe der Solltemperatur der Vorlaufkonditionierung sein sollte. Daher ist es besonders vorteilhaft, die Vorkonditioniereinheit in einem Bereich der hydraulischen Verbindung von Abscheidebereich und Mischbereich des Entlüftungstanks anzuordnen. Es ist dabei weiters vorteilhaft, wenn der Mischbereich des Entlüftungstanks strömungstechnische Einbauten besitzt, die eine turbulente Strömung und Durchmischung des rückgeführten und des vom Sensor zugeführten Kraftstoffs unterstützen.

Zur möglichst genauen rechnerischen Berücksichtigung der verbliebenen und eventuell unvermeidlichen Schwankungen der Kraftstoffmasse im Messkreis, wie sie insbesondere aus folgenden, sich ändernden Einflüssen resultieren:
- Menge an eingetragenem Gas (das ist insbesonders verdampfter Kraftstoff sowie Kompressionsluft und Verbrennungsgas der Brennkraftmaschine), das den im Messkreis befindlichen Kraftstoff zum Teil verdrängt und die effektive Kompressibilität und den effektiven Ausdehnungskoeffizienten des Kraftstoffs verändert
- Drücke in den zugehörigen Teilvolumina des Messkreises bei gegebener Elastizität der Wandungen (Rohrleitungen, Schläuche) des Messkreises und effektive Kompressibilität des Kraftstoffs samt darin enthaltener Gasmenge
- Temperaturen in den zugehörigen Teilvolumina des Messkreises bei gegebenen Ausdehnungskoeffizienten der Volumswandungen und effektiver Druckabhängigkeit der Dichte des Kraftstoffs samt darin enthaltener Gasmenge
ist bei einem erfindungsgemäßen Verfahren weiters vorgesehen, dass in einer Identifikationsphase bei zumindest einem Betriebspunkt der Brennkraftmaschine mit vorbekanntem Kraftstoffverbrauch der auftretende Scheinverbrauch gemessen und in Abhängigkeit von den zumindest näherungsweise bestimmten Werten für Temperatur und Druck des Kraftstoffs in den Teilvolumina des Messkreises und von wesentlichen Betriebsgrößen der Brennkraftmaschine, insbesondere von den von der Brennkraftmaschinensteuerung (ECU) ausgegebenen Werten für Drehzahl, aktuellen Kraftstoffverbrauch und Rail-Druck, erfasst wird, wonach aus diesen Daten die für einen Scheinverbrauch maßgeblichen Parameter bestimmt und bei der eigentlichen Verbrauchsmessung modellbezogen berücksichtigt werden. Dies geht aus von einem an sich bekannten Modell des Messkreises mit Teilvolumina, für die jeweils eine einheitliche, mittlere Konzentration an eingetragenem Gas angenommen oder zumindest näherungsweise bestimmt werden kann, in denen es je einheitliche effektive Druck- und Temperaturabhängigkeiten der darin enthaltenen Kraftstoffmasse gibt und in denen zumindest eine der Größen Druck und Temperatur gemessen oder zumindest näherungsweise bestimmt werden kann.

Als Betriebsart der Brennkraftmaschine in der Identifikationsphase kommt bevorzugt der geschleppte Betrieb mit Nullverbrauch zur Anwendung, wobei das Schleppen entweder (auf dem Prüfstand) durch einen externen Antrieb oder aber auch durch das Trägheitsmoment der Brennkraftmaschine selbst oder eines angeschlossenen Schwungrades oder dergleichen erfolgen kann. Es ist hier anzumerken, dass die erfindungsgemäße Verbrauchsmessung (Vorrichtung und Verfahren) natürlich sowohl auf dem Prüfstand als auch an einer bestimmungsgemäß verwendeten und eingebauten Brennkraftmaschine (beispielsweise stationär oder in einem Fahrzeug) erfolgen kann - bei nicht stationärer Anwendung sind aber Beeinträchtigungen, insbesonders durch wechselnde Beschleunigungen nicht auszuschließen.

In weiters bevorzugter Ausgestaltung des erfindungsgemäßen Verfahrens können an sich bekannte selbstlernende Algorithmen zur Anpassung an Änderungen während des Messbetriebs und zur laufenden Optimierung der Messgenauigkeit eingesetzt werden, wobei vorzugsweise die gemessenen oder vorgegebenen Werte für insbesondere Drücke, Temperaturen und Kraftstoffverbrauch und die von der Brennkraftmaschinensteuerung gegebenen Werte für Drehzahl, Rail-Druck und aktuellen Kraftstoffverbrauch jeweils nicht nur mit ihrem Absolutwert, sondern insbesondere auch mit dem Wert ihrer Änderung gemeinsam ausgewertet werden, um die modellbezogene Redundanz dieser Werte für die Bestimmung wichtiger Systemgrößen, insbesondere Volumina, Dichten, Kompressibilitäten, Ausdehnungskoeffizienten, Zeitkonstanten des Ansprechverhaltens der Messleitungen und Sensoren, zu bestimmen. Bei Kenntnis derartiger Systemgrößen und dazu gehöriger Zustandsgrößen kann der aktuelle Scheinverbrauch modellbezogen berechnet werden und der tatsächliche Verbrauch kann aus den aktuellen Messwerten und Berechnungswerten des Scheinverbrauchs laufend kompensiert bzw. ermittelt und ausgegeben werden.

Die benötigten Größen können entweder auf übliche Art gemessen oder näherungsweise bestimmt werden. Die in den Teilvolumina des Kraftstoff-Vorlaufs enthaltene Kraftstoffmasse wird wesentlich durch die im Messverfahren vorbekannten Drücke und Temperaturen beeinflusst. Im Kraftstoff-Rücklauf ist der Gaseintrag in hohem Maß abhängig von Drehzahl und Last der Brennkraftmaschine, wobei die Last im Wesentlichen mit dem aktuellen Kraftstoffverbrauch korreliert ist und das Kennfeld des Gaseintrags näherungsweise durch eine Messung im geschleppten Betrieb bei Nulllast bestimmt werden kann. Gleiches gilt auch für die Temperatur des Kraftstoffrücklaufs nach einem befeuerten Betrieb der Brennkraftmaschine.

Ein dermaßen identifiziertes Modell des Messsystems kann vorteilhaft auch zur Überwachung des Messkreises und zur Fehlerdiagnose verwendet werden, indem ein bekannter oder auf andere Art ermittelter Kraftstoffverbrauch, vorzugsweise ein Nullverbrauch, mit dem vom Messsystem ermittelten Verbrauch verglichen wird. Nützlich dafür sind auch die ständig aktuell gehaltenen Systemparameter und die Beobachtung von eventuell auftretenden Änderungen, die dem Benutzer oder Service-Ingenieur nützliche Hinweise auf unzulässige Veränderungen und Fehler des Messkreises und Messsystems liefern können. Zur wesentlichen Verbesserung der Messgenauigkeit genügt dabei aber häufig statt einer komplizierten modelbasierten Berechnung mit vielen nur näherungsweise bekannten Parametern auch bereits eine sehr pragmatische, additive beziehungsweise subtraktive Berücksichtigung des in charakteristischen Phasen des Prüflaufs auftretenden Scheinverbrauchs, wie er in der Identifikationsphase erkannt wurde. Solche charakteristischen Phasen zur Ermittlung und Berücksichtigung von Scheinverbrauchskennwerten sind insbesonders durch die Übergänge zwischen unterschiedlichen Betriebspunkten der Brennkraftmaschine gekennzeichnet. Beispielsweise kann an der kalten Brennkraftmaschine und im geschleppten Betrieb (Nullverbrauch) ein Start- Stop-Manöver durchgeführt und der dabei auftretende Scheinverbrauch sowie gegebenenfalls die Temperatur des Kraftstoffrücklaufs gemessen werden. Bei einem ähnlichen Manöver im gefeuerten Betrieb der Brennkraftmaschine tritt praktisch der gleiche Scheinverbrauch auf und kann damit sehr einfach additiv beziehungsweise subtraktiv berücksichtigt werden, wobei sinnvollerweise noch eine Skalierung mit der aktuellen Rücklauftemperatur durchgeführt werden kann.

In ähnlicher Weise kann man bei einer raschen Drehzahländerung (Drehzahlrampe) einen Scheinverbrauch zusammen mit der aktuellen Drehzahl der Brennkraftmaschine und/oder dem Druck des Kraftstoffs am Eintritt und/oder Austritt der Brennkraftmaschine bestimmen und dann in vergleichbaren Phasen (bei gefeuertem Betrieb) berücksichtigen. Weiters kann man auch den Scheinverbrauch zusammen mit dem Hochdruck (Rail-Druck) des Einspritzsystems bestimmen, wenn dieser zum Beispiel nach einem Notstop der Brennkraftmaschine plötzlich absinkt. Oder man bestimmt während der Erwärmung der Brennkraftmaschine den Scheinverbrauch in Abhängigkeit von der sich ändernden Temperatur des Kraftstoff-Rücklaufs. Dabei kann es auch vorteilhaft sein, solche charakteristischen Betriebsphasen in der Identifikationsphase mehrfach zu durchfahren und in Abhängigkeit von anderen sich dabei ändernden Parametern zu erfassen, zum Beispiel in Abhängigkeit von sich ändernden Drücken und/oder Temperaturen in den Teilvolumina des Messkreises.

Die Erfindung wird im Folgenden noch anhand der in der Zeichnung schematisch dargestelltem Ausführungsbeispiel von erfindungsgemäßen Vorrichtungen näher erläutert. Fig.1 zeigt dabei eine Vorrichtung zur Messung des dynamischen Kraftstoffverbrauchs einer Brennkraftmaschine nach dem bisher bekannten Stand der Technik, Fig.2 -6 zeigen Detailansichten der Umgebung des Entlüftungstanks einer entsprechenden erfindungsgemäßen Vorrichtung in unterschiedlichen Ausgestaltungen, und die Fig.7-9 zeigen weitere Ausführungsbeispiele erfindungsgemäßer Vorrichtungen.

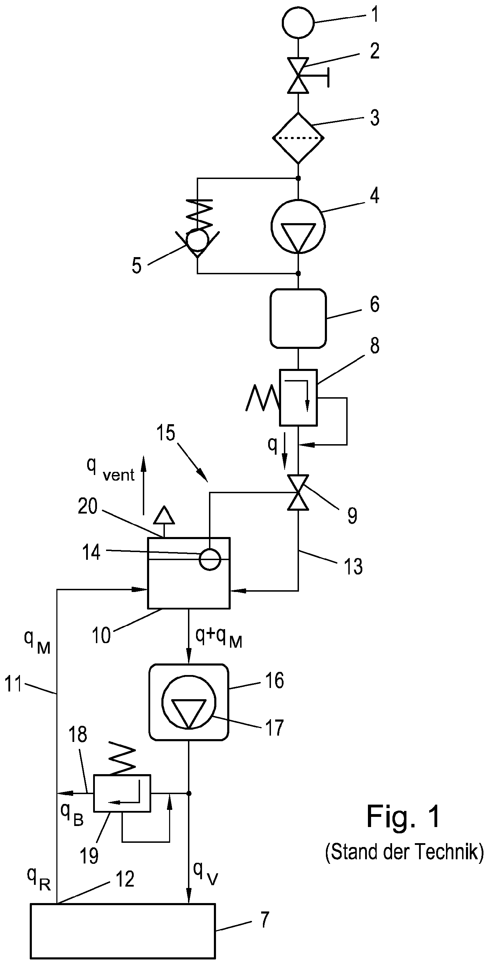

Bei der einen bekannten Stand der Technik darstellenden Vorrichtung nach Fig.1 fließt der einer nicht weiter dargestellten Versorgungsleitung oder einem Kraftstofftank an einem Anschluss 1 entnommene Kraftstoff durch ein Absperrventil 2 und ein Kraftstoff-Filter 3 zu einer Zulaufpumpe 4, welche parallel geschaltet ein Überströmventil 5 aufweist. Nach der Zulaufpumpe ist der eigentliche Verbrauchssensor 6 angeordnet, der den tatsächlichen Kraftstoffverbrauch des Kraftstoffsystems 7 einer hier nicht weiter dargestellten Brennkraftmaschine ermittelt. Zur genauen Regelung des Druckes im Zulauf q des Kraftstoffs kann ein Zulaufdruckregler 8 vorgesehen sein, der den damit druckmäßig vorkonditionierten Kraftstoff an ein hier als Schwimmerventil ausgebildetes Stellventil 9 eines Entlüftungstanks 10 liefert.

Der Entlüftungstank 10 ist mit einer Rücklaufleitung 11 von der Abströmseite 12 des Kraftstoffsystems 7 sowie mit der Zulaufleitung 13 vom Stellventil 9 verbunden und weist eine hier aus dem Stellventil 9 und dem zugehörigen Schwimmer 14 gebildete Füllstand-Regeleinrichtung 15 auf, mittels der die Kraftstoffmasse im Füllvolumen des Entlüftungstanks 10 samt seinen Anschlussleitungen zumindest weitgehend konstant gehalten werden kann.

In der Zulaufleitung 13 zum Kraftstoffsystem 7 ist nach dem Entlüftungstank 10 ein Konditioniersystem 16 mit Systempumpe 17 angeordnet, mittels welchem beispielsweise der Kraftstoffdruck und/oder die Kraftstofftemperatur genau eingestellt werden kann. Weiters ist dann von der Zulaufleitung 13 abzweigend eine Bypassleitung 18 (optional mit Differenzdruckregler bzw. Druckregler 19) vorgesehen, womit Vorlauf und Rücklauf auf eine vernachlässigbar geringe Druckdifferenz oder aber ein für den Vorlauf im System vorgeschriebener Druck eingestellt werden kann.

Mit qvent ist der Entlüftungsstrom am Entlüftungsanschluss 20 des Entlüftungstanks 10 bezeichnet; mit qv der Vorlaufstrom zum Kraftstoffsystem 7; mit q_{R} der Rücklaufstrom vom Kraftstoffsystem 7; mit q_{B} der Bypassstrom über die Bypassleitung 18; mit q_{M} der Rücklaufstrom des Messkreises in den Entlüftungstank 10 und mit q + q_{M} der Entnahmestrom in der Entnahmeleitung 24 aus dem Entlüftungstank 10.

Der überschüssige Kraftstoff von der Abströmseite 12 des Kraftstoffsystems 7 (Rücklaufstrom q_{R}), welcher unter anderem auch zur Kühlung und Schmierung des Kraftstoffsystems 7 dient, darf der Messung wegen nicht vorbei am Verbrauchssensor 6 zurück in einen Tank oder in die Kraftstoffzuleitung geführt werden, sondern muss im eigentlichen Messkreis verbleiben und also der Leitung zwischen Verbrauchssensor 6 und Konditioniersystem 16 zugeführt werden. Nachdem aber die Menge der mit dem rückgeführten Kraftstoff transportierten Gase (verdampfter Kraftstoff und gegebenenfalls auch Kompressionsluft und Verbrennungsgas aus der Brennkraftmaschine) auch beträchtlich sein kann, müssen diese Gase möglichst rasch vollständig aus dem rückgeführten Kraftstoff entfernt werden, wozu der Entlüftungstank 10 vor dem oder am Zusammenfluss des rückgeführten und des vom Verbrauchssensor 6 frisch zugeführten Kraftstoffs vorgesehen ist, womit das Konditioniersystem 16 und in der Folge das Kraftstoffsystem 7 mit blasenfreien Kraftstoff versorgt werden können. Damit der Verbrauchssensor 6 den tatsächlichen Verbrauch zeitaktuell und genau messen kann und möglichst keinen Scheinverbrauch mitanzeigt muss die Kraftstoffmasse im gesamten Messbereich und natürlich vor allem im Entlüftungstank 10 mit seinem relativ großen Volumen möglichst konstant sein. Dazu dient das Stellventil 9 mit seinem Schwimmer 14, das den Zulauf dann öffnet wenn der Füllstand im Entlüftungstank 10 unter einen bestimmten Pegel sinkt. Damit kann gewährleistet werden, dass vom Verbrauchssensor 6 gerade soviel Kraftstoff in den Entlüftungstank gelangt, dass die Kraftstoffmasse im Entlüftungstank 10 konstant bleibt.

Bei dieser Vorrichtung nach dem Stand der Technik funktioniert das aber nur unter der Bedingung, dass dem Entlüftungstank 10 zu jedem Zeitpunkt über die Entnahmeleitung 24 zumindest soviel oder mehr Kraftstoffvolumen entnommen als über die Rücklaufleitung 11 zugeführt wird. Es kann aber beispielsweise beim Abstellen der Brennkraftmaschine, wenn die im Hochdruckteil des Einspritzsystems gespeicherte Kraftstoffmenge zurückflutet, oder beim Reduzieren der Einspritzmenge und der Drehzahl der Brennkraftmaschine (coast-down) durchaus zeitweise mehr Volumen zugeführt als entnommen werden, womit der Füllstand im Entlüftungstank 10 bei gesperrtem Stellventil 9 weiter ansteigt und der Verbrauchssensor 6 nicht die Rückströmung als negativen Scheinverbrauch sondern Nullverbrauch anzeigt.

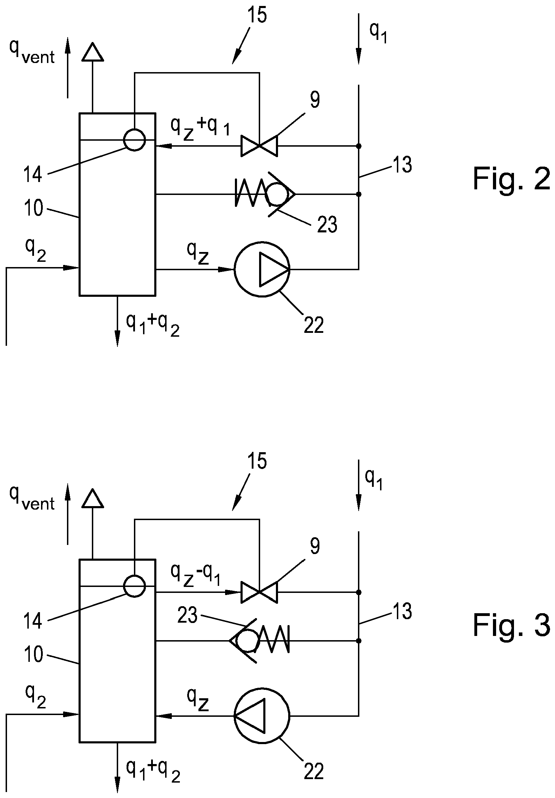

Um von Änderungen der im Messkreis gespeicherten Kraftstoffmasse bedingte Scheinverbräuche und die davon hervorgerufenen Messfehler zu verhindern oder zumindest bei der Ermittlung des tatsächlichen Verbrauchs berücksichtigen zu können, weisen die Vorrichtungen nach der vorliegenden Erfindung gemäß den Fig. 2-9 Füllstand-Regeleinrichtungen 15 an einem der Anschlüsse des Entlüftungstanks 10 auf, welche mittels einer Zirkulationspumpe 22 sowie ein damit verbundenes, ständig durchströmtes, abhängig vom zu regelndem Füllstand mehr oder weniger geöffnetes Stellventil 9 nicht nur einen geregelten Zulauf sondern auch eine geregelte Kraftstoffentnahme aus dem Entlüftungstank 10 ermöglichen. Dieses Stellventil 9 wird also nicht wie üblich in der Nähe des Schaltpunktes "auf/zu" betrieben sondern unabhängig vom aktuellen Kraftstoffverbrauch in einem Betriebspunkt mit permanentem Fluid-Durchfluss, was vorteilhaft für die möglichst stetige genaue Beibehaltung des Füllvolumens ist.

Gemäß Fig. 2 ist der Entlüftungstank 10 mit dem entsprechenden Zirkulationskreis auf der Einströmseite (entsprechend Zuströmleitung 13 in Fig. 1) versehen und weist ein zum Entlüftungstank 10 hin durchströmtes Stellventil 9 auf. Je nachdem ob das Stellventil 9 abhängig von der Position des Schwimmers 14 mehr oder weniger geöffnet wird kann damit der Füllstand im Entlüftungstank 10 positiv oder negativ korrigiert werden. Parallel zur Zirkulationspumpe 22 ist weiters noch ein Überdruckventil 23 angeordnet, welches hier den Abbau von erhöhtem Druck im Zirkulationskreis zum Tank hin ermöglicht.

Gemäß Fig.3 ist wiederrum der Zirkulationskreis mit Zirkulationspumpe 22 und Stellventil 9 auf der Einströmseite (Zulaufleitung 13) vorgesehen, wobei das Stellventil 9 nun vom Entlüftungstank 10 weg durchströmt wird, die Zirkulationspumpe 22 also im Gegensatz zu der Anordnung nach Fig.2 nicht aus dem Entlüftungstank 10 sondern in den Entlüftungstank 10 fördert. Auch damit ist in vorteilhafter Weise eine positive und negative Korrektur des Füllstands im Entlüftungstank 10 unter stetiger Durchströmung des mehr oder weniger geöffneten Regelventils 9 möglich. Das Überdruckventil 23 ermöglicht hier einen Druckabbau in Richtung Zulaufleitung 13.

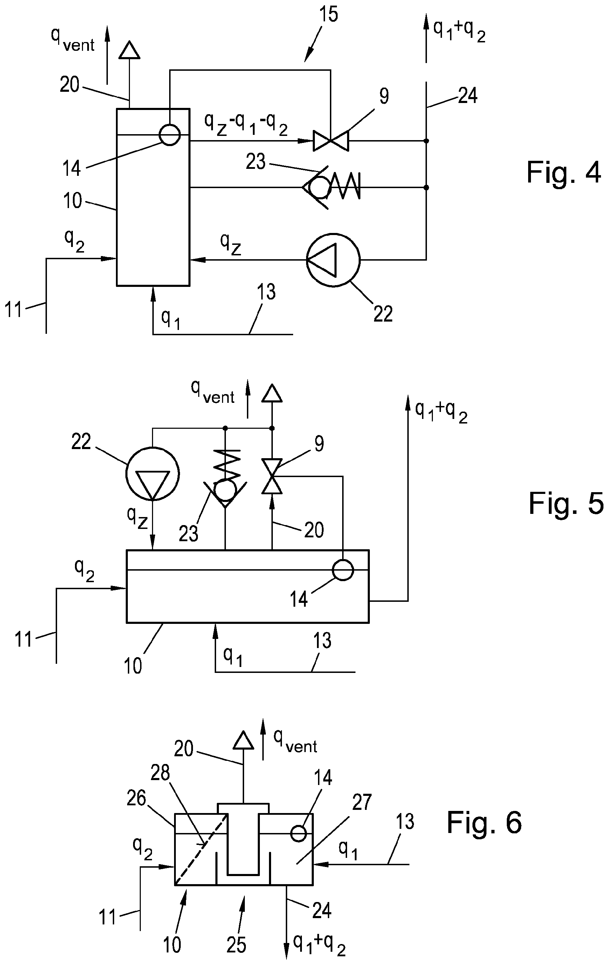

Gemäß Fig. 4 ist der Zirkulationskreis auf der Ausströmseite des Entlüftungstanks 10 vorgesehen. Der Zustrom q1 von blasenfreiem Kraftstoff von der Zuströmleitung 13 in Fig.1 oder gegebenenfalls von der Bypassleitung 18 in Fig.1 ist hier unten am Entlüftungstank 10 einmündend gezeigt. Der Zustrom q2 von gasblasenreichem Kraftstoff vom hier nicht gezeigten Rücklauf der Brennkraftmaschine 12 in Fig.1 erfolgt über die Rücklaufleitung 11. Die Ablaufleitung 24 ist mit dem hier nicht weiter dargestellten Konditioniersystem 16 in Fig.1 verbunden. Die Füllstand-Regeleinrichtung 15 ist hier also gebildet von dem am Ablaufanschluss des Entlüftungstanks 10 angeordneten, ständig mehr oder weniger durchströmten Stellventil 9 samt der Zirkulationspumpe 22 - auch hier ist wiederum ein Druckabbau in die Zulaufleitung zum Konditioniersystem ermöglichendes Überdruckventil 23 vorgesehen. Die Strömungsrichtung in den Komponenten des Zirkulationskreises 9, 22, 23 kann so wie hier gezeigt oder natürlich auch anders gerichtet erfolgen, sinngemäß wie bei Fig.2 und 3.

Gemäß Fig.5 ist der Zirkulationskreis auf der Entlüftungsseite des Entlüftungstanks 10 vorgesehen. Das vom Schwimmer 14 gesteuerte Stellventil 9 regelt also den ständigen Gasfluss über die Zirkulationspumpe 22, womit der Gasdruck im Entlüftungstank und damit ebenfalls der Füllstand im Entlüftungstank 10 sowohl positiv als auch negativ korrigiert werden kann. Die Strömungsrichtung in den Komponenten des Zirkulationskreises 9, 22, 23 kann so wie hier gezeigt oder natürlich auch anders gerichtet erfolgen, sinngemäß wie bei Fig.2 und 3.

Gemäß Fig.6 weist der Entlüftungstank 10 einer erfindungsgemäßen Vorrichtung zwei durch Einbauten 25 getrennte Bereiche 26, 27 auf, welche mit vernachlässigbar kleinem Strömungswiderstand und bezüglich der Schwerkraft auf selbem Niveau hydraulisch kommunizieren und so an ihrer Verbindung einen jeweils gleichen Druck aufweisen. Außerdem sind im mit der Rücklaufleitung 11 vom Kraftstoffssystem verbundenen Bereich 26 gitterartige Einbauten 28 zur Verbesserung des Abscheidens der Gasblasen vorgesehen. Der zur Füllstand-Regeleinrichtung 15 gehörige Schwimmer 14 ist im zweiten Bereich 27 angeordnet, der damit bereits weitestgehend blasenfreien Kraftstoff enthält. Er dient zur Füllstandsregelung gemäß beispielsweise Fig. 2 - 4, oder gegebenenfalls auch nach Fig. 5, da die Entlüftungsleitung 20 ebenfalls an beide Bereiche 26, 27 angeschlossen ist.

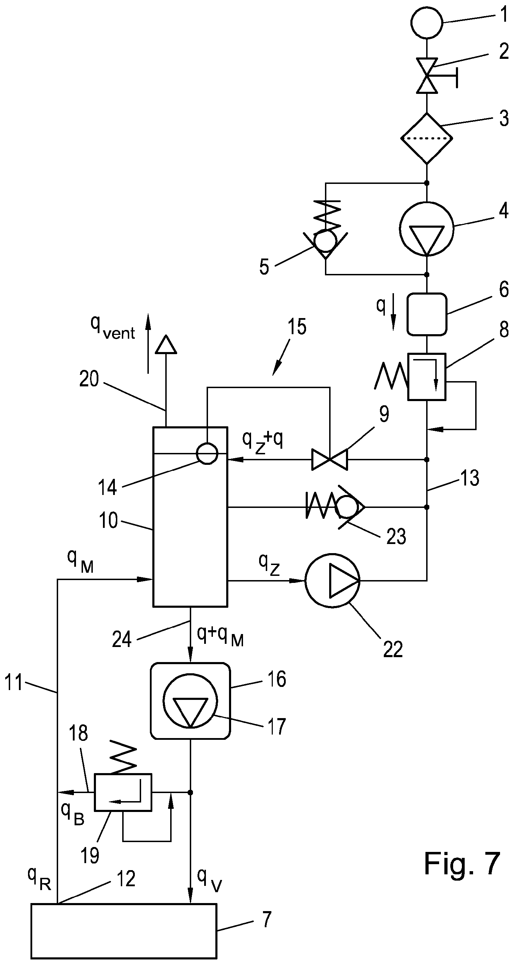

Die erfindungsgemäße Vorrichtung nach Fig.7 entspricht vom grundsätzlichen Aufbau her der bekannten und anhand von Fig.1 beschriebenen Ausführung. Gleiche Teile sind wiederrum mit gleichen Bezugszeichen wie in Fig.1 versehen. Abweichend zu Fig.1 ist in Fig.7 die erfindungsgemäße Anordnung eines Zirkulationskreises auf der Einströmseite zum Entlüftungstank wie im Detail in Fig.2 dargestellt und zu Fig.2 oben beschrieben. Zur Vermeidung von Wiederholungen wird hier also lediglich auf die Beschreibung von Fig.1 und Fig.2 verwiesen.

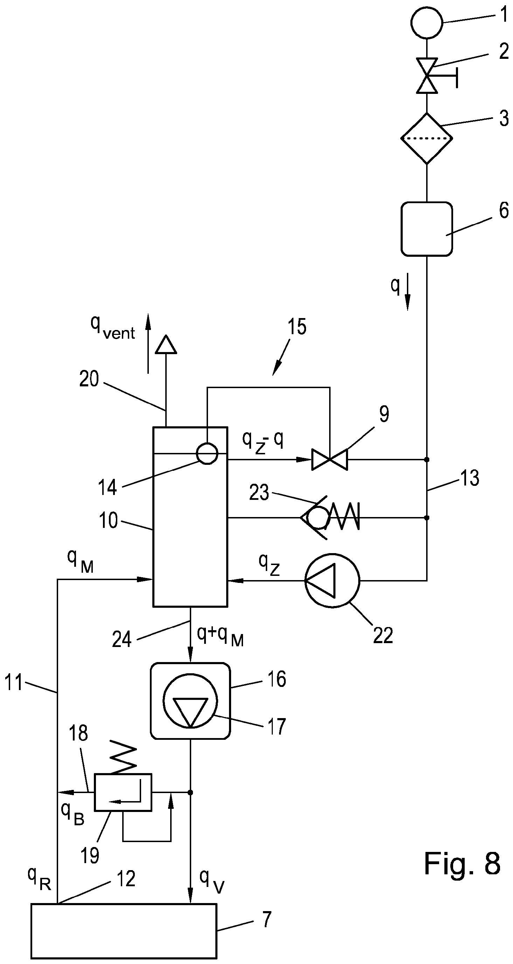

Fig.8 entspricht im Wesentlichen der erfindungsgemäßen Ausgestaltung nach Fig.3 bei einer grundsätzlich aus Fig.1 bekannten Vorrichtung. Auch hier wird hinsichtlich der Beschreibung auf die Ausführungen zu Fig.1 und Fig.3 verwiesen. Abweichend zu Fig.1 und Fig.7 ist bei der Vorrichtung nach Fig.8 keine Zulaufpumpe 4 und kein Zulaufdruckregler 8 vorgesehen, da die in den Entlüftungstank 10 und gegen den dort eingestellten Druck fördernde Zirkulationspumpe 22 die Funktion auch der Zulaufpumpe 4 übernimmt und also diese vorteilhafte Einsparung ermöglicht.

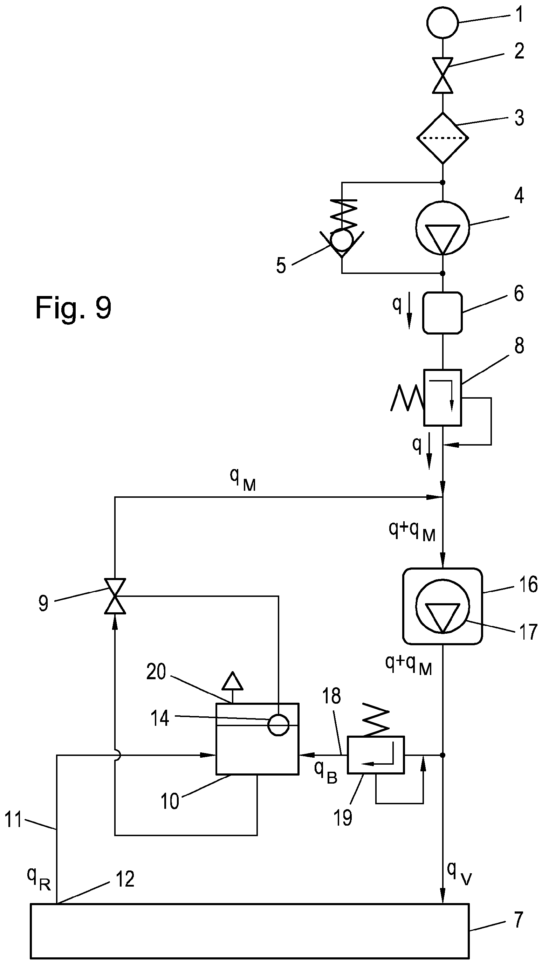

Bei der Ausführung nach Fig.9 ist der Entlüftungstank 10 nun an der Zusammenführung der Bypass-Leitung 18 mit der Rücklaufleitung 11 vom Kraftstoffsystem angeordnet, wobei das Stellventil 9 vom Entlüftungstank 10 weg durchströmt ist und sich an dessen Ausströmseite befindet. Als Zirkulationspumpe 22 (in den bisherigen erfindungsgemäßen Ausführungen) dient hier vorteilhafterweise gleichzeitig die Systempumpe 17 im Konditionierungssystem 16, die eine stetige Durchströmung des Messkreises und somit auch des Stellventils 9 aufrecht erhält.

## Patentansprüche

1. Vorrichtung zur kontinuierlichen Messung des dynamischen Kraftstoffverbrauchs einer Brennkraftmaschine, mit einem in einer Rücklaufleitung (11) von der Abströmseite (12) des Kraftstoffsystems (7) der Brennkraftmaschine angeordneten Entlüftungstank (10), der auch mit der Zulaufleitung (13) des Messsystems zur Versorgung des Kraftstoffsystems (7)der Brennkraftmaschine verbunden ist und eine Füllstand-Regeleinrichtung (15) zur zumindest weitgehenden Konstanthaltung der Kraftstoffmasse im Füllvolumen aufweist, **dadurch gekennzeichnet**, das die an einem Anschluss des Entlüftungstanks (10) befindliche Füllstand-Regeleinrichtung (15) eine Zirkulationspumpe (22) sowie ein damit verbundenes, ständig durchströmtes, abhängig vom zu regelnden Füllstand mehr oder weniger geöffnetes Stellventil (9) aufweist.

2. Vorrichtung nach Anspruch 1, **dadurch gekennzeichnet, dass** Zirkulationspumpe (22) und Stellventil (9) in einer Zirkulationsleitung zwischen Entlüftungstank (10) und Zulaufleitung (13) angeordnet sind.

3. Vorrichtung nach Anspruch 1, **dadurch gekennzeichnet, dass** Zirkulationspumpe (22) und Stellventil (9) in einer Entnahmeleitung (24) des Entlüftungstanks (10) angeordnet sind.

4. Vorrichtung nach Anspruch 1, **dadurch gekennzeichnet, dass** Zirkulationspumpe (22) und Stellventil (9) an einem Entgasungsanschluss (20) des Entlüftungstanks (10) angeordnet sind.

5. Vorrichtung nach einem der Ansprüche 1 bis 4, **dadurch gekennzeichnet, dass** parallel zur Zirkulationspumpe (22) ein Überdruckventil (23) angeordnet ist.

6. Vorrichtung nach einem der Ansprüche 1 bis 5, **dadurch gekennzeichnet, dass** der Entlüftungstank (10) zumindest zwei durch Einbauten (25) getrennte Bereiche (26, 27) aufweist, welche mit vernachlässigbar geringem Strömungswiderstand hydraulisch kommunizieren.

7. Vorrichtung nach einem oder mehreren der Ansprüche 1 bis 6, **dadurch gekennzeichnet, dass** der Entlüftungstank (10) mit Stellventil (9) nahe an der Brennkraftmaschine angeordnet ist, vorzugsweise dort, wo eine Bypass-Leitung (18) zwischen Vorlaufleitung und Rücklaufleitung (11) der Brennkraftmaschine und die Rücklaufleitung (11) zusammengeführt sind.

8. Vorrichtung nach Anspruch 2 oder 3, **dadurch gekennzeichnet, dass** als Zirkulationspumpe (22) unmittelbar eine im Messsystem auch sonst benötigte Kraftstoffpumpe (4 bzw. 17) dient.

9. Vorrichtung nach Anspruch 4, **dadurch gekennzeichnet, dass** als Zirkulationspumpe (22) unmittelbar eine Kompressorpumpe eines Druckluftnetzes der Brennkraftmaschine dient.

10. Vorrichtung nach einem oder mehreren der Ansprüche 1 bis 9, **dadurch gekennzeichnet, dass** zusätzlich ein Konditioniersystem (16) zur Temperaturkonditionierung des rückgeführten Kraftstoffes vorgesehen ist.

11. Verfahren zur kontinuierlichen Messung des dynamischen Kraftstoffverbrauchs einer Brennkraftmaschine, wobei der vom Kraftstoffsystem (7) der Brennkraftmaschine rückgeführte, unverbrauchte Kraftstoff in einem Entlüftungstank (10), dessen Füllstand zumindest weitestgehend konstant gehalten wird, entgast und dem Zulauf (24) zur Anströmseite des Kraftstoffsystems (7) der Brennkraftmaschine wieder zugefügt wird, **dadurch gekennzeichnet, dass** an einem Anschluss des Entlüftungstanks (10) eine ständige, füllstandsabhängig geregelte Strömung des Mediums (Zu- bzw. Abfuhr) mit einer ständigen Zirkulationsströmung von Kraftstoff, oder einer ständigen Zu- bzw. Abfuhr von gasförmigem Medium erfolgt.

12. Verfahren nach Anspruch 11, **dadurch gekennzeichnet, dass** eine ständige Zirkulationsströmung von Kraftstoff zwischen Entlüftungstank (10) und Zulauf (13) des Kraftstoffes erfolgt.

13. Verfahren nach Anspruch 11, **dadurch gekennzeichnet, dass** eine ständige Zirkulationsströmung von Kraftstoff zwischen Entlüftungstank (10) und Entnahmeleitung (24) des Kraftstoffs erfolgt.

14. Verfahren nach Anspruch 11, **dadurch gekennzeichnet, dass** eine ständige Zu- bzw. Abfuhr von gasförmigem Medium am Entgasungsanschluss (20) des Entlüftungstanks (10) erfolgt.

15. Verfahren nach einem der Ansprüche 11 bis 14, **dadurch gekennzeichnet, dass** Medium durch das teilweise geöffnete Stellventil (9) andauernd in den Entlüftungstank (10) hineinströmt.

16. Verfahren nach einem der Ansprüche 11 bis 14, **dadurch gekennzeichnet, dass** der ständige Mediumfluss durch das teilweise geöffnete Stellventil (9) aus dem Entlüftungstank (10) geführt wird.

17. Verfahren zur kontinuierlichen Messung des dynamischen Kraftstoffverbrauchs einer Brennkraftmaschine mit einer Vorrichtung nach einem der Ansprüche 1-10 und nach einem Verfahren nach einem der Ansprüche 11-16, **dadurch gekennzeichnet, dass** in einer Identifikationsphase bei zumindest einem Betriebspunkt der Brennkraftmaschine mit vorbekanntem Kraftstoffverbrauch der auftretende Scheinverbrauch gemessen und in Abhängigkeit von den zumindest näherungsweise bestimmten Werten für Temperatur und Druck des Kraftstoffs in den Teilvolumina des Messkreises und von wesentlichen Betriebsgrößen der Brennkraftmaschine, insbesondere von den von der Brennkraftmaschinensteuerung (ECU) ausgegebenen Werten für Drehzahl, aktuellen Kraftstoffverbrauch und Rail-Druck, erfasst wird, wonach aus diesen Daten die für einen Scheinverbrauch maßgeblichen Parameter bestimmt und bei der eigentlichen Verbrauchsmessung modellbezogen berücksichtigt werden.

18. Verfahren nach Anspruch 17, **dadurch gekennzeichnet, dass** die Brennkraftmaschine in der Identifikationsphase mit Nullverbrauch geschleppt wird.

19. Verfahren nach Anspruch 17 oder 18, **dadurch gekennzeichnet, dass** an sich bekannte selbstlernende Algorithmen zur Anpassung an Änderungen während des Prüfbetriebs und zur laufenden Optimierung der Messgenauigkeit eingesetzt werden, wobei vorzugsweise die gemessenen oder vorgegebenen Werte für insbesondere Drücke, Temperaturen und Kraftstoffverbrauch und die von der Brennkraftmaschinensteuerung ausgegebenen Werte für Drehzahl, Rail-Druck und aktuellen Kraftstoffverbrauch jeweils zumindest mit dem Wert ihrer Änderung gemeinsam ausgewertet werden, um die modellbezogene Redundanz dieser Werte für die Bestimmung wichtiger Systemkenngrößen, insbesondere Volumina, Dichten, Kompressibilitäten, Ausdehnungkoeffizienten, Zeitkonstanten des Ansprechverhaltens der Messleitungen und Sensoren, zu bestimmen.

## Claims

1. A device for continuous measurement of the dynamic fuel consumption of an internal combustion engine, with a venting tank (10) which is disposed in a return line (11) from the outflow side (12) of the fuel system (7) of the internal combustion engine and which is also connected to the inlet line (13) of the measuring system for supplying the fuel system (7) of the internal combustion engine and has a filling level regulator (15) for keeping the fuel mass in the filling volume at least largely constant, **characterized in that** the filling level regulator (15) located at a connection of the venting tank (10) has a circulation pump (22) as well as a control valve (9) connected thereto, through which the flow passes continuously, and which is opened more or less as a function of the filling level to be regulated.

2. The device according to claim 1, **characterized in that** the circulation pump (22) and the control valve (9) are disposed in a circulation line between the venting tank (10) and the intake line (13).

3. The device according to claim 1, **characterized in that** the circulation pump (22) and the control valve (9) are disposed in a withdrawal line (24) of the venting tank (10).

4. The device according to claim 1, **characterized in that** the circulation pump (22) and the control valve (9) are disposed at a degassing connection (20) of the venting tank (10).

5. The device according to one of claims 1 to 4, **characterized in that** an overpressure valve (23) is disposed in parallel with the circulation pump (22).

6. The device according to one of claims 1 to 5, **characterized in that** the venting tank (10) has at least two regions (26, 27) which are separated by fittings (25) and communicate hydraulically with negligibly small flow resistance.

7. The device according to one or more of claims 1 to 6, **characterized in that** the venting tank (10) with the control valve (9) is disposed close to the internal combustion engine, preferably where a bypass line (18) between the feed line and the return line (11) of the combustion engine and the return line (11) are combined.

8. The device according to claim 2 or 3, **characterized in that** a fuel pump (4 or 17) which is also otherwise required in the measuring system serves directly as the circulation pump (22).

9. The device according to claim 4, **characterized in that** a compressor pump of a compressed air system of the internal combustion engine serves directly as the circulation pump (22).

10. Device according to one or more of claims 1 to 9, **characterized in that** a conditioning system (16) for temperature conditioning of the returned fuel is additionally provided.

11. A method for continuous measurement of the dynamic fuel consumption of an internal combustion engine, wherein the unconsumed fuel returned from the fuel system (7) of the internal combustion engine is degassed in a venting tank (10), of which the filling level is kept at least mostly constant, and is again added to the inlet (24) to the inflow side of the fuel system (7) of the internal combustion engine, **characterized in that** a continuous flow of the medium (delivery or removal) regulated as a function of the filling level takes place at a connection of the venting tank (10) with a continuous circulation flow of fuel or a permanent delivery or removal of gaseous medium, respectively.

12. The method according to claim 11, **characterized in that** a continuous circulating flow of fuel takes place between the venting tank (10) and the intake (13) for the fuel.

13. The method according to claim 11, **characterized in that** a continuous circulating flow of fuel takes place between the venting tank (10) and the withdrawal line (24) for the fuel.

14. The method according to claim 11, **characterized in that** a continuous delivery or removal of gaseous medium takes place at the degassing connection (20) of the venting tank (10).

15. The method according to one of claims 11 to 14, **characterized in that** medium flows continuously into the venting tank (10) through the partially opened control valve (9).

16. The method according to one of claims 11 to 14, **characterized in that** the continuous flow of medium flow is guided out of the venting tank (10) through the partially opened control valve (9).

17. The method for continuous measurement of the dynamic fuel consumption of an internal combustion engine with a device according to one of claims 1 - 10 and according to a method according to one of claims 11 - 16, **characterized in that** in an identification phase the apparent consumption occurring is measured at least at one operating point of the internal combustion engine with a previously known fuel consumption, and is detected depending upon the values determined at least approximately for temperature and pressure of the fuel in the part-volumes of the measurement circuit and upon significant operating variables of the internal combustion engine, in particular upon the values output by the internal combustion engine control unit (ECU) for engine speed, current fuel consumption and rail pressure, and the definitive parameters for an apparent consumption are determined from these data and are taken into account by modelling in the actual consumption measurement.

18. The method according to claim 17, **characterized in that** the internal combustion engine is trailed with zero consumption in the identification phase.

19. The method according to claim 17 or 18, **characterized in that** self-learning algorithms which are known *per se* can be used for adaptation to changes during the testing operation and for ongoing optimization of the accuracy of measurement, wherein preferably the measured or predetermined values, in particular for pressures, temperatures and fuel consumption, and the values output by the internal combustion engine control unit for engine speed, rail pressure and current fuel consumption in each case, are evaluated at least together with the value of their change, in order to determine the model-related redundancy of these values for the determination of important system characteristics, in particular volumes, densities, compressibilities, coefficients of expansion, and time constants of the response behavior of the measurement lines and sensors.

## Revendications

1. Dispositif de mesure en continu de la consommation dynamique de carburant d'un moteur à combustion interne, comprenant un réservoir de purge d'air (10) agencé dans une conduite de retour (11) du côté aval (12) du système de carburant (7) du moteur à combustion interne, qui est également raccordé à la conduite d'alimentation (13) du système de mesure pour alimenter le système de carburant (7) du moteur à combustion interne et présente un dispositif de réglage de niveau de remplissage (15) pour stabiliser au moins largement la masse de carburant dans le volume de remplissage, **caractérisé en ce que** le dispositif de réglage de niveau de remplissage (15) se trouvant à un raccordement du réservoir de purge d'air (10) présente une pompe de circulation (22) ainsi qu'une soupape de réglage (9) qui lui est raccordée, est traversée en permanence et est plus ou moins ouverte en fonction du niveau de remplissage à réguler.

2. Dispositif selon la revendication 1, **caractérisé en ce que** la pompe de circulation (22) et la soupape de réglage (9) sont agencées dans une conduite de circulation entre le réservoir de purge d'air (10) et la conduite d'alimentation (13).

3. Dispositif selon la revendication 1, **caractérisé en ce que** la pompe de circulation (22) et la soupape de réglage (9) sont agencées dans une conduite de prélèvement (24) du réservoir de purge d'air (10).

4. Dispositif selon la revendication 1, **caractérisé en ce que** la pompe de circulation (22) et la soupape de réglage (9) sont agencées dans un raccordement de dégazage (20) du réservoir de purge d'air (10).

5. Dispositif selon l'une quelconque des revendications 1 à 4, **caractérisé en ce qu'**une soupape de surpression (23) est agencée en parallèle avec la pompe de circulation (22).

6. Dispositif selon l'une quelconque des revendications 1 à 5, **caractérisé en ce que** le réservoir de purge d'air (10) présente au moins deux zones (26, 27) séparées par des chicanes (25), qui communiquent en mode hydraulique avec une faible résistance hydraulique négligeable.

7. Dispositif selon une ou plusieurs des revendications 1 à 6, **caractérisé en ce que** le réservoir de purge d'air (10) est agencé avec la soupape de réglage (9) à proximité du moteur à combustion interne, de préférence là où une conduite de dérivation(18) et la conduite de retour (11) sont réunies entre la conduite montante et la conduite de retour (11) du moteur à combustion interne.

8. Dispositif selon les revendications 2 ou 3, **caractérisé en ce que** l'on se sert comme pompe de circulation (22) directement d'une pompe à carburant (4 ou 17) d'ailleurs également nécessaire dans le système de mesure.

9. Dispositif selon la revendication 4, **caractérisé en ce que** l'on se sert comme pompe de circulation (22) directement d'une pompe à compression d'un réseau d'air comprimé du moteur à combustion interne.

10. Dispositif selon une ou plusieurs des revendications 1 à 9, **caractérisé en ce qu'**il est prévu en plus un système de conditionnement (16) pour conditionner la température du carburant remis en circulation.

11. Procédé de mesure en continu de la consommation dynamique de carburant d'un moteur à combustion interne, dans lequel le carburant non utilisé retourné du système de carburant (7) au moteur à combustion interne est dégazé dans un réservoir de purge d'air (10), dont le niveau de remplissage est maintenu au moins très largement constant, et ajouté à l'alimentation (24) du côté amont du système de carburant (7) du moteur à combustion interne, **caractérisé en ce qu'**il se produit, à un raccordement du réservoir de purge d'air (10), un écoulement permanent réglé en fonction du niveau de remplissage du milieu (alimentation ou évacuation) avec un écoulement de circulation permanent de carburant ou une alimentation ou une évacuation permanente de milieu gazeux.

12. Procédé selon la revendication 11, **caractérisé en ce qu'**il se produit un écoulement de circulation permanente de carburant entre le réservoir de purge d'air (10) et l'alimentation (13) du carburant.

13. Procédé selon la revendication 11, **caractérisé en ce qu'**il se produit un écoulement de circulation permanent de carburant entre le réservoir de purge d'air (10) et la conduite de prélèvement (24) du carburant.

14. Procédé selon la revendication 11, **caractérisé en ce qu'**il se produit une alimentation ou une évacuation permanente de milieu gazeux sur le raccordement de dégazage (20) du réservoir de purge d'air (10).

15. Procédé selon l'une quelconque des revendications 11 à 14, **caractérisé en ce que** le milieu continue à pénétrer dans le réservoir de purge d'air (10) à travers la soupape de réglage partiellement ouverte (9).

16. Procédé selon l'une quelconque des revendications 11 à 14, **caractérisé en ce que** le flux de milieu permanent est guidé hors du réservoir de purge d'air (10) à travers la soupape de réglage partiellement ouverte (9).

17. Procédé de mesure en continu de la consommation dynamique de carburant d'un moteur à combustion interne avec un dispositif selon l'une quelconque des revendications 1 à 10 et selon un procédé selon l'une quelconque des revendications 11 à 16, **caractérisé en ce que** l'on mesure, dans une phase d'identification, au niveau d'au moins un point de fonctionnement du moteur à combustion interne avec une consommation de carburant préalablement connue, la consommation apparente intervenante et l'on détecte, en fonction des valeurs au moins approximativement déterminées pour la température et la pression du carburant dans les volumes partiels du circuit de mesure et de grandeurs de fonctionnement sensibles du moteur à combustion interne, en particulier des valeurs délivrées par le réglage du moteur à combustion interne (ECU) pour le régime, la consommation de carburant et la pression de la rampe d'injection actuels, après quoi on détermine à partir de ces données les paramètres prédominants pour une consommation apparente et on en tient compte dans la mesure de la consommation propre par rapport au modèle.

18. Procédé selon la revendication 17, **caractérisé en ce que** le moteur à combustion interne dans la phase d'identification est remorqué avec une consommation nulle.

19. Procédé selon la revendication 17 ou 18, **caractérisé en ce que** des algorithmes d'auto-apprentissage connus en soi sont utilisés pour s'adapter à des modifications au cours du fonctionnement d'essai et couramment optimiser la précision de la mesure, dans lequel, de préférence, les valeurs mesurées ou préétablies en particulier pour les pressions, les températures et la consommation de carburant et les valeurs tirées de la commande du moteur à combustion interne pour le régime, la pression de la rampe d'injection et la consommation de carburant actuels sont évaluées respectivement conjointement au moins avec la valeur de leur modification pour déterminer la redondance par rapport au modèle de ces valeurs pour la détermination de grandeurs importantes du système, en particulier les volumes, les densités, les compressibilités, les coefficients de dilatation, les constantes de temps du mode de réponse des conduites de mesure et des capteurs.
